# EUROPÄISCHE PATENTANMELDUNG

(11) **EP 3 958 470 A1**
(43) Veröffentlichungstag der Anmeldung: **23.02.2022**
(21) Anmeldenummer: 20191783.8
(22) Anmeldetag: 19.08.2020
(51) Int. Cl.: H04B 3/54, H02J 13/00

(54) **VERFAHREN ZUR DATENÜBERTRAGUNG IN EINEM NIEDERSPANNUNGSNETZ**

(71) Anmelder: Siemens Aktiengesellschaft, 80333 München (DE)
(72) Erfinder: Muslimovic, Jasmin, 1170 Wien (AT); Angerer, Lukas, 3433 Königsstetten (AT); Schlick, Marian, 1030 Wien (AT)
(74) Vertreter: Maier, Daniel Oliver

(57) **Zusammenfassung**

Die Erfindung betrifft ein Verfahren zur Datenübertragung in einem Niederspannungsnetz (SN) mit mehreren elektrischen Phasenleitern (L1, L2, L3). Dabei werden die Phasenleiter (L1, L2, L3) des Niederspannungsnetzes (SN) zusätzlich zur Stromversorgung für eine Übertragung von Daten, Nachrichten bzw. Signalen zwischen einer Mastereinheit (ME) und Client-Einheiten (CE) genutzt, wobei von der Mastereinheit (ME) über alle Phasenleiter (L1, L2, L3) des Niederspannungsnetzes (SN) Nachrichten und Daten versendet und empfangen werden können. Dabei werden vom Verfahren folgende Schritte durchlaufen:
a) Aussenden einer Anforderungsnachricht über einen Phasenleiter (L1, L2, L3), mit welcher von der Mastereinheit (ME) direkt ansprechbare Client-Einheiten (CE) aufgefordert werden (101), eine Antwortnachricht mit einem Wert für eine Verbindungsqualität zu übermitteln (102);
b) Speichern zumindest des Wertes für die Verbindungsqualität für eine jeweilige Client-Einheit (CE) nach Erhalt der Antwortnachricht der jeweiligen Client-Einheit (CE, 102) ;
c) Durchführen der Schritte a) und b), bis von der Mastereinheit (ME) über jeden Phasenleiter (L1, L2, L3) des Niederspannungsnetzes (SN) die Anforderungsnachricht versendet worden ist (103);
d) Vergleichen der für die jeweilige Client-Einheit (CE) gespeicherten Werte für die Verbindungsqualität (104); und
e) Auswählen des Phasenleiters (L1, L2, L3) für die Datenübertragung mit der jeweiligen Client-Einheit (CE, 105), für welchen der gespeicherte Wert für die Verbindungsqualität der jeweiligen Client-Einheit (CE) am geringsten ist.

## Beschreibung

### Technisches Gebiet

Die vorliegende Erfindung betrifft ein Verfahren zur Datenübertragung in einem Niederspannungsnetz mit mehreren elektrischen Phasenleitern. Dabei werden die Phasenleiter des Niederspannungsnetzes zusätzlich zur Stromversorgung für eine Übertragung von Daten, Nachrichten bzw. Signalen zwischen einer Mastereinheit und Client-Einheiten genutzt. Die Mastereinheit und die Client-Einheiten sind elektrisch an das Niederspannungsnetz angeschlossen und die Mastereinheit kann alle Phasenleiter des Niederspannungsnetzes Daten, Nachrichten bzw. Signale senden und empfangen.

### Stand der Technik

Niederspannungsnetze sind jener Teil eines Energieversorgungssystems, durch welchen eine Verteilung der elektrischen Energie an die elektrischen Endverbraucher (z.B. Haushalte, elektrische Geräte, etc.) erfolgt. Um Spannungsverluste zu vermeiden, sind Niederspannungsnetze in der räumlichen Ausdehnung auf einen Bereich von einigen 100 m bis zu einigen wenigen Kilometern beschränkt. Sie werden regional über Transformatorstationen (Ortsnetzstationen) aus einem übergeordneten Mittelspannungsnetz gespeist. Da für die Verteilung von elektrischer Energie Wechselspannung genutzt wird, sind Niederspannungsnetze üblicherweise mehrphasig, insbesondere dreiphasig, ausgeführt. Die elektrische Energie wird hierbei idealisiert über zumeist drei Außenleiter bzw. Phasenleiter übertragen, welchen ein sinusförmiger Spannungsverlauf aufgeprägt ist, welcher um einen definierten zeitlichen Bezug phasenverschoben ist. Dabei werden üblicherweise sowohl die Außenleiter als auch die zeitliche Beziehung der ihnen aufgeprägten Spannungsverläufe als Phase bezeichnet.

Heutzutage werden die elektrischen Leitungen eines Energieverteilungsnetzes nicht nur zur Energieübertragung und Energieverteilung verwendet, sondern gleichzeitig auch zur Datenübertragung zwischen an das jeweilige Energieverteilungsnetz angeschlossene Einheiten (z.B. Endverbraucher, Energiezähler, Lastschaltgeräte, Gateways, etc.) genutzt. Eine derartige Nutzung von vorhandenen, elektrischen Leitungen im Niederspannungsnetz zur Datenübertragung zwischen angeschlossenen Einheiten wird beispielsweise als Power Line Communication oder PLC bezeichnet. Anwendungsszenarien für PLC umfassen heutzutage neben einer Anbindung von Haushalten an das Internet, hauptsächlich Mess-, Steuer- und Regelanwendungen wie z.B. Energieverbrauchsmessungen mittels intelligenter Zählereinheiten (Smart Meter) oder Sensoranwendungen in Verteilerstationen in einem intelligenten Stromnetz (Smart Grid) oder z.B. Steueranwendungen für Ladestationen für E-Mobilität.

Teilnehmer eines solchen PLC-Netzes für die Datenübertragung in einem Niederspannungsnetzes sind auf der einen Seite Client-Einheiten, wie z.B. intelligente Zählereinheiten bzw. Smart Meter, E-Mobilitätsladestationen, etc., welche für die Datenkommunikation im Niederspannungsnetz eingerichtet und verfügbar sind, und auf der anderen Seite eine Mastereinheit, wie z.B. ein Datenkonzentrator oder ein so genanntes Data Gateway. Dabei übernimmt die Mastereinheit eine Koordinatorrolle im PLC-Netz mit Aufgaben, wie z.B. dem Aufbau des PLC-Netzes, Anmeldung von Client-Einheiten am Netz, um die Client-Einheiten für die Kommunikation verfügbar zu machen, und einer regelmäßigen Abfrage von Nutzdaten der Client-Einheiten. Weiterhin kann die Mastereinheit beispielsweise auch Nachrichten und/oder Signale an die Client-Einheiten senden. Die Mastereinheit kann dazu bei einem mehrphasigen Niederspannungsnetz meist über alle Phasenleiter des Niederspannungsnetzes Daten, Nachrichten und/oder Signale senden und empfangen.

In einem intelligenten Stromnetz werden beispielsweise die intelligenten Zählereinheiten bzw. die Smart Meter als Client-Einheiten mittels PLC von der Mastereinheit (z.B. Datenkonzentrator, Data Gateway) überwacht und die Datenübertragung von der Mastereinheit gesteuert. Die Mastereinheit sammelt z.B. die Messdaten der als Client-Einheiten angeschlossenen intelligenten Zählereinheiten und leitet diese z.B. an ein Zentralsystem weiter. Dazu ist die Mastereinheit üblicherweise in einer Ortnetzstation des Niederspannungsnetzes angebracht und kann über alle Phasen mit den Client-Einheiten bzw. den intelligenten Zählereinheiten eine Kommunikationsverbindung aufbauen. Im Gegensatz dazu sind die Client-Einheiten bzw. die intelligenten Zählereinheiten z.B. in Häusern oder Zählerräumen bei den Endverbrauchern angebracht. Die Client-Einheiten bzw. intelligenten Zählereinheiten sind dabei elektrisch über alle Phasenleiter an das Niederspannungsnetz angeschlossen, können aber meist nur über einen Phasenleiter kommunizieren bzw. Daten, Nachrichten, etc. versenden. Das PLC-Netz ist üblicherweise so aufgebaut, dass die Client-Einheiten entweder direkt von der Mastereinheit ansprechbar sind bzw. direkt mit der Mastereinheit kommunizieren oder die Kommunikation mit der Mastereinheit indirekt über andere Client-Einheiten erfolgt. D.h. aus Sicht der Mastereinheit gibt es Client-Einheiten, welche direkt über das Stromnetz bzw. die Phasenleiter erreichbar und ansprechbar sind. Diese Client-Einheiten werden beispielsweise auch als benachbarte Client-Einheiten bezeichnet. Weitere Client-Einheiten sind von der Mastereinheit nur indirekt über zumindest eine weitere Client-Einheit erreichbar. D.h. Daten bzw. Datenpakete werden auf einer gegebenen Kommunikationsroute von Mastereinheit über zumindest eine weitere Client-Einheit an die vorgegebene Ziel-Client-Einheit übermittelt.

Allerdings kann die Datenübertragung in einem Niederspannungsnetz bzw. in einem PLC-Netz durch an das Niederspannungsnetz angeschlossene Lasten bzw. Verbraucher stark beeinflusst werden. Von den Lasten bzw. Verbrauchern können verschiedene Störimpulse einen für PLC relevanten Frequenzbereich eingespeist werden. Dadurch kommt es während der Datenübertragung beispielsweise zu Paketverlusten und zu einer dementsprechenden Verschlechterung der Übertragungsqualität. Meist handelt es sich bei derartigen Störimpulsen oder Störsignalen um Störungen durch Verbraucher, in welchen Bauelemente mit einer nicht linearen Strom-Spannungscharakteristik verwendet werden. Die Störsignale oder -impulse können z.B. dauerhaft, periodisch oder kurzzeitig vorhanden sein und treten meist auf jenem Phasenleiter auf, an welchem der Verbraucher angeschlossen ist. Allerdings können die Störsignale bzw. -impulse durch so genanntes kapazitives Übersprechen zwischen den Leitungen auf die anderen Phasenleiter des Niederspannungsnetzes - zumindest mit gedämpfter Amplitude - übertragen werden. Dadurch kann die Kommunikation zwischen Mastereinheit und Client-Einheiten auf allen Phasen des Niederspannungsnetzes auf allen Phasen des Niederspannungsnetzes gestört bzw. die Übertragungsqualität reduziert sein.

Aus der Recommendation ITU-T G.9903 (02/2014) "Narrowband orthogonal frequency division multiplexing power line communication transceiver for G3-PLC networks" ist beispielsweise für ein PLC-Netzwerk basierend auf dem G3-PLC (Third Generation PLC)-Protokoll eine Methode zur Phasendetektion ("AC phase detection") bekannt, um erkennen zu können, an welcher Phase eine Client-Einheit bzw. eine intelligente Zählereinheit angebracht ist. Mit dieser Methode kann mittels einer so genannten Nachbarschaftstabelle (neighbour table), welche in jeder Client-Einheit bzw. intelligenten Zählereinheit hinterlegt ist, ermittelt werden, über welchen Phasenleiter bzw. welche Phase die jeweilige Client-Einheit Daten versendet. Dazu ist es notwendig, dass die Mastereinheit diese Tabelle von den Client-Einheiten abfragen kann. Weiterhin kann mit dieser Methode nur ermittelt werden, welcher Phasenleiter bzw. welche Phase für den Datenversand von der jeweiligen Client-Einheit genutzt wird. Die Methode liefert allerdings keine Information darüber, ob die jeweils für den Datenversand genutzte Phase zum Zeitpunkt der Übertragung der Daten von einem Störsignal negativ beeinflusst wird oder ob die für den Datenversand genutzte Phase zum Zeitpunkt der Übertragung der Daten auch eine für die Datenübertragung entsprechende Übertragungsqualität aufweist.

### Darstellung der Erfindung

Der Erfindung liegt daher die Aufgabe zugrunde, ein Verfahren zur Datenübertragung in einem mehrphasigen Niederspannungsnetz anzugeben, durch welches mit geringem Aufwand Störeinflüssen auf die Datenübertragung im Niederspannungsnetz reduziert sowie eine Verbesserung der Übertragungsqualität erreicht werden.

Diese Aufgabe wird durch ein Verfahren und eine zugehörige Anordnung der eingangs beschriebenen Art mit den Merkmalen der unabhängigen Ansprüche gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs beschriebenen Art zur Datenübertragung in einem Niederspannungsnetz mit mehreren elektrischen Phasenleitern, welche für eine Übertragung von Daten zwischen einer Mastereinheit und Client-Einheiten genutzt werden. Dabei können von der Mastereinheit über alle Phasenleiter des Niederspannungsnetzes Nachrichten und Daten versendet und empfangen werden. Dabei werden folgende Schritte durchlaufen:
a) Aussenden einer Anforderungsnachricht durch die Mastereinheit über einen Phasenleiter, mit welcher von der Mastereinheit direkt ansprechbare Client-Einheiten aufgefordert werden, eine Antwortnachricht mit einem Wert für eine Verbindungsqualität zu übermitteln;
b) Speichern zumindest des Wertes für die Verbindungsqualität für eine jeweilige Client-Einheit nach Erhalt der Antwortnachricht der jeweiligen Client-Einheit;
c) Durchführen der Schritte a) und b), bis von der Mastereinheit über jeden Phasenleiter des Niederspannungsnetzes die Anforderungsnachricht versendet worden ist;
d) Vergleichen der für die jeweilige Client-Einheit gespeicherten Werte für die Verbindungsqualität durch die Mastereinheit; und
e) Auswählen des Phasenleiters für die Datenübertragung mit der jeweiligen Client-Einheit, für welchen der gespeicherte Wert für die Verbindungsqualität der jeweiligen Client-Einheit am geringsten ist.

Der Hauptaspekt des erfindungsgemäßen Verfahrens besteht darin, dass jener Phasenleiter für die Datenübertragung zwischen Mastereinheit und der jeweiligen Client-Einheit ausgewählt wird, welcher die beste Verbindungsqualität aufweist. D.h., es wird jener Phasenleiter des Niederspannungsnetzes gesucht und selektiert, welcher aus Sicht der Mastereinheit die besten Bedingungen für die Gestaltung einer Kommunikation mit der jeweiligen Client-Einheit bietet. Dadurch wird ein Einfluss von Störungen auf die Datenübertragung im Niederspannungsnetz verringert und die Verbindungsqualität angehoben. Weiterhin kann eine Steigerung der Datenübertragungsrate erreicht werden, da z.B. Daten bzw. Datenpakete, Nachrichten, Signale, etc. weniger oft wiederholt werden müssen, und es können beispielsweise auch Modulationsarten für das Aufbringen der Daten auf den elektrischen Leiter genutzt werden, welche zu höheren Übertragungsraten führen. Weiterhin wird durch das erfindungsgemäße Verfahren eine Erreichbarkeit der Client-Einheiten im Niederspannungsnetz, wodurch z.B. Nutzdaten schneller ausgelesen, Messdaten schneller an die Mastereinheit übertragen werden können, etc. und eine Stabilität des Datenübertragung bzw. Datenkommunikation über das Niederspannungsnetz verbessert wird.

Eine bevorzugte Ausführungsvariante des Verfahrens zur Datenübertragung im Niederspannungsnetz sieht vor, dass von der Mastereinheit im Schritt a) die Anforderungsnachricht zusätzlich gleichzeitig über alle Phasenleiter gesendet wird, um Werte für die Verbindungsqualität von direkt ansprechbaren Client-Einheiten abzufragen. Dadurch können auf einfache Weise zusätzliche Informationen über die Verbindungsqualität zur jeweiligen Client-Einheit gewonnen werden. Üblicherweise wird von der jeweiligen Client-Einheit keine Information darüber übermittelt, an welchen Phasenleiter die jeweilige Client-Einheit kommunikationstechnisch angebunden ist. Durch das parallele Aussenden der Anforderungsnachricht können gegebenenfalls Client-Einheiten erreicht werden, welche bei der Aussendung je Phase z.B. nicht geantwortet haben.

Es ist weiterhin von Vorteil, wenn von der Mastereinheit für einen Empfang von Daten und/oder Nachrichten der jeweiligen Client-Einheit der für die jeweilige Client-Einheit ausgewählte Phasenleiter eingestellt wird. Das bedeutet, dass die Mastereinheit zwar auch nach einer Phasenselektion Daten, Nachrichten, Signale, etc. über alle Phasenleiter des Niederspannungsnetzes an die jeweiligen Client-Einheiten aussendet. Für einen Empfang von Daten, Nachrichten, etc., welche von der jeweiligen Client-Einheit ausgesendet werden, wird von der Mastereinheit die selektierte Phase bzw. der selektierte Phasenleiter genutzt. Von der Mastereinheit kann damit die Kommunikation mit der jeweiligen Client-Einheit derart gestaltet werden, dass einen Verbindung mit den besten Bedingungen - d.h. z.B. guter Verbindungsqualität, möglichst geringen Störungen, guter bzw. hoher Übertragungsrate, etc. - genutzt wird.

Idealerweise kann der für die jeweilige Client-Einheit ausgewählte Phasenleiter mittels einer Schaltkomponente in der Mastereinheit eingestellt werden. Die Mastereinheit kann dazu z.B. einen internen, Software gesteuerten Schalter aufweisen, mit welchem einzelne Phasenleiter kommunikationstechnisch aus- bzw. weggeschaltet werden können. Damit lässt sich sehr einfach, ein für die Kommunikation mit der jeweiligen Client-Einheit ausgewählte Phasenleiter einstellen.

Es ist günstig, wenn für die Datenübertragung zwischen der Mastereinheit und der Client-Einheit Powerline Communication verwendet wird. Powerline Communication oder PLC bezeichnet eine Technik, durch welche vorhandene elektrische Leitungen im Niederspannungsnetz zum Aufbau von lokalen Netzwerken zur Datenübertragung für unterschiedliche Anwendungsszenarien - wie z.B. Fernabfrage von Messzählern, Steuerung von Client-Einheiten, etc. - verwendet werden können. Bei PLC ist vorteilhafter Weise keinen zusätzliche Verkabelung notwendig.

Zweckmäßigerweise wird als Kommunikationsprotokoll für die Power Line Communication das G3-PLC-Protokoll verwendet. Das so genannte G3-PLC-Protokoll oder Third Generation PLC-Protokoll wird beispielsweise in der Recommendation ITU-T G.9903 (02/2014) beschrieben und stellt z.B. einen herstellerunabhängigen Standard für die Kommunikation in einem PLC-Netzwerk dar. Alternativ kann in einem PLC-Netzwerk beispielsweise das so genannte PRIME-Protokoll bzw. PowerRline Intelligent Metering Evolution-Protokoll als Kommunikationsprotokoll genutzt werden.

Eine bevorzugtes Ausführungsbeispiel des erfindungsgemäßen Verfahrens sieht vor, dass als Mastereinheit ein Datenkonzentrator oder ein so genanntes Data Gateway eingesetzt wird. Ein Datenkonzentrator ist z.B. ein Bestandteil eines so genannten Smart Metering-Systems, welcher als Datenkoordinator alle an ein Niederspannungsnetz als Client-Einheiten angeschlossene Geräte (z.B. intelligente Zählereinheiten, etc.) überwacht. Vom Datenkonzentrator können z.B. Daten (z.B. Messdaten) von den Client-Einheiten gesammelt und dann gebündelt an ein Zentralsystem weitergesendet werden. Weiterhin kann der Datenkonzentrator auch die Kommunikation zu den Client-Einheiten aufbauen. Das so genannte Data Gateway kann einen ähnliche Koordinationsrolle wie der Datenkonzentrator übernehmen. Beide können z.B. in der Nähe einer Ortsnetztransformationsstation oder in einer Ortsnetztransformationsstation angeordnet sein.

Als Client-Einheiten werden beispielsweise zweckmäßigerweise intelligente Zählereinheiten oder so genannte Smart Meter verwendet, von welche von einer Mastereinheit (z.B. Datenkonzentrator, Data Gateway, etc.) Daten ausgelesen werden. Weiterhin können je nach Anwendungsszenario des erfindungsgemäßen Verfahren auch Ladestationen für E-Mobilität, intelligente Straßenbeleuchtungseinheiten, etc. als Client-Einheiten vorgesehen sein, welche z.B. über eine Mastereinheit angesteuert werden bzw. von welchen von einer Mastereinheit Daten und/oder Nachrichten gesammelt werden.

### Kurzbeschreibung der Zeichnung

Die Erfindung wird nachfolgend in beispielhafter Weise anhand der beigefügten Figuren erläutert. Dabei zeigen:
- Figur 1: beispielhaft und schematisch einen Abschnitt eines Niederspannungsnetz mit mehreren Phasenleitern zum Übertragen von Daten zwischen einer Mastereinheit und zumindest einer Client-Einheit;
- Figur 2: schematisch einen beispielshaften Ablauf des erfindungsgemäßen Verfahrens zur Datenübertragung in einem Niederspannungsnetzwerk mit mehreren Phasenleitern

### Ausführung der Erfindung

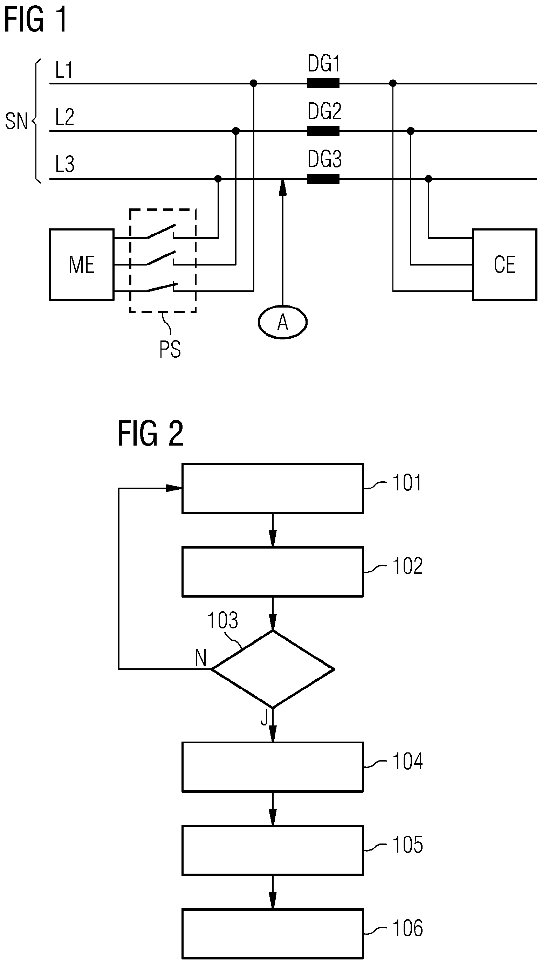

Figur 1 zeigt in schematischer und beispielhafter Weise ein Niederspannungsnetz SN, welches drei elektrische Phasenleiter L1, L2, L3 aufweist. Bei jedem der drei Phasenleiter L1, L2, L3 sind Dämpfungsglieder DG1, DG2, DG3 dargestellt, welche beispielsweise eine Leitungslänge symbolisieren. An die drei Phasenleiter L1, L2, L3 ist elektrisch eine Mastereinheit ME an das Niederspannungsnetz angeschlossen. Weiterhin ist an die drei Phasenleiter L1, L2, L3 eine beispielhafte Client-Einheit CE elektrisch an das Niederspannungsnetz angeschlossen.

Zusätzlich zur Energieversorgung werden die Phasenleiter L1, L2, L3 des Niederspannungsnetzes SN für eine Datenübertragung zwischen der Mastereinheit ME und der Client-Einheit CE genutzt. Für die Datenübertragung über das Niederspannungsnetz SN wird beispielsweise die so genannte Power Line Communication oder PLC verwendet. Als Kommunikationsprotokoll kann dabei z.B. G3-PLC-Protokoll oder Third Generation PLC verwendet werden, welches beispielsweise in der Recommendation ITU-T G.9903 (02/2014) beschrieben wird. Alternativ kann auch das so genannte PRIME-Protokoll bzw. PowerRline Intelligent Metering Evolution-Protokoll für das PLC-Netz genutzt werden.

Die Mastereinheit ME kann z.B. ein Datenkonzentrator oder ein Data Gateway sein. Die Mastereinheit kann z.B. in örtlicher Nähe einer Ortsnetztransformatorstation oder in der Ortsnetztransformatorstation angeordnet sein. Im PLC-Netz wird von der Mastereinheit ME eine Koordinatorrolle übernommen und das Gesehen bei der Datenübertragung im Stromnetz SN bzw. auf den Phasenleitern L1, L2, L3 bestimmt. Die Mastereinheit ME kann dazu eingerichtet sein, über alle drei Phasenleiter L1, L2, L3 des Niederspannungsnetzes SN Daten, Nachrichten und/oder Signale zu senden und zu empfangen.

Weiterhin können für die Kommunikation über das Stromnetz SN bei der Mastereinheit ME mittels einer Schaltkomponente PS, welche beispielsweise als interner Software gesteuerter Schalter PS ausgestaltet ist, einzelne Phasenleiter L1, L2, L3 kommunikationstechnisch aus- oder eingeschaltet werden. D.h. die Mastereinheit ME kann z.B. wie in Figur 1 beispielhaft dargestellt kommunikationstechnisch mit einem ersten Phasenleiter L1 kommunikationstechnisch durch die Schaltkomponente PS verbunden sein, während z.B. ein zweiter Phasenleiter L2 und ein dritter Phasenleiter L3 mit Hilfe der Schaltkomponente PS aus- bzw. weggeschaltet sind. Damit kann die Mastereinheit ME über alle drei Phasenleiter L1, L2, L3 z.B. gleichzeitig an die Client-Einheit CE versenden. Für den Empfang der Daten von z.B. der Client-Einheit CE kann die Mastereinheit damit beispielsweise einen Phasenleiter (z.B. den ersten Phasenleiter L1) oder alle Phasenleiter L1, L2, L3 auswählen. Eine Auswahl des für die Kommunikation mit der Client-Einheit CE genutzten Phasenleiters L1 erfolgt beispielsweise mittels des erfindungsgemäßen Verfahrens zur Datenübertragung über ein Niederspannungsnetz SN, welches anhand von Figur 2 noch näher beschrieben wird.

Weiterhin kann im PLC-Netz aus Sicht der Mastereinheit ME unterschieden werden, ob eine Client-Einheit CE von der Mastereinheit ME direkt oder indirekt - d.h. über zumindest eine weitere Client-Einheit CE - erreichbar bzw. ansprechbar ist. Bei einer vorn der Mastereinheit ME direkt ansprechbaren Client-Einheit CE kann die Mastereinheit ME über das Stromnetz SN bzw. PLC-Netz die Daten, Nachrichten bzw. Signale üblicherweise in Form von Paketen direkt senden. Bei von der Mastereinheit ME indirekt erreichbaren bzw. indirekt ansprechbaren Client-Einheiten werden die Datenpakete auf einer angegebenen Route über zumindest eine weitere Client-Einheit an eine Ziel-Client-Einheit weitergeleitet. Die in Figur 1 beispielhaft dargestellte Client-Einheit CE ist eine von der Mastereinheit ME direkt ansprechbare Client-Einheit CE, mit welcher von der Mastereinheit ME Daten, Nachrichten bzw. Signale direkt über das Niederspannungsnetz SN ausgetauscht werden.

Die Client-Einheit CE kann z.B. je nach Anwendungsszenario eine intelligente Zählereinheit (Smart Meter) oder ein anderes Endgerät (z.B. Ladestation für E-Mobilität, Straßenbeleuchtung, etc.) sein, welches an das Stromnetz SN angeschlossen ist und dazu eingerichtet ist, mittels PLC Daten, Nachrichten und/oder Signale auszutauschen. Üblicherweise sind Client-Einheiten CE, wie z.B. intelligente Zählereinheiten, kommunikativ nur über einen der Phasenleiter L1, L2, L3 bzw. über eine Phase L1, L2, L3 an das Niederspannungsnetz SN bzw. an das PLC-Netz angekoppelt. Aufgrund von so genanntem Übersprechen können allerdings von der Client-Einheit CE auf einer Phase L1, L2, L3 gesendete Daten, Nachrichten, etc. auch auf den anderen Phase L1, L2, L3 - zumindest in abgeschwächter Form - z.B. von der Mastereinheit ME empfangen werden, da beim Übersprechen ein elektrisches Signal vom übertragenden Phasenleiter L1, L2, L3 auf den anderen Phasenleitern L1, L2, L3 induktiv, kapazitiv oder galvanisch üblicherweise gedämpft eingekoppelt wird.

Weiterhin ist im Niederspannungsnetz SN an den dritten Phasenleiter L3 eine Last A angeschlossen, durch welche Störimpulse oder Störsignale in einem für die Powerline Communication relevanten Frequenzbereich in das Niederspannungsnetz SN eingespeist werden. Durch die Störimpulse oder Störsignale der Last A wird beispielsweise Übertragungsqualität auf dem dritten Phasenleiter L3 gestört. Meist werden die Störsignale durch kapazitives Übersprechen auch auf die anderen Phasen - d.h. in Figur 1 den ersten und den zweiten Phasenleiter L1, L2 - mit geringerer Amplitude übertragen und können auch dort die Verbindungs- oder Übertragungsqualität beeinträchtigen.

Durch das erfindungsgemäße Verfahren zur Datenübertragung in einem Niederspannungsnetz SN mit mehreren Phasenleitern L1, L2, L3, welche in der Folge anhand der Figur 2 beschrieben wird, wird jener Phasenleiter L1, L2, L3 des Niederspannungsnetzes SN ermittelt, welcher aus Sicht der Mastereinheit ME die besten Bedingungen für die Kommunikation mit der direkt ansprechbaren Client-Einheit CE bietet.

Figur 2 zeigt schematisch einen beispielhaften Ablauf des erfindungsgemäßen Verfahrens zur Datenübertragung in einem Niederspannungsnetzwerk SN mit mehreren Phasenleitern L1, L2, L3, an welches die Mastereinheit ME elektrisch wie kommunikationstechnisch dreiphasig angeschlossen ist. Von der Mastereinheit wird in einem Anforderungsschritt 101 zuerst jeweils für jede der drei Phasenleiter L1, L2, L3 eine Anforderungsnachricht - beispielsweise in Form eines so genannten Beacon Requests oder Leuchtfeuersignals - an alle Client-Einheiten CE in der Nachbarschaft ausgesendet. D.h. von der Mastereinheit ME wird zuerst für die erste Phase L1, dann für die zweite Phase L2, dann für die dritte Phase L3 die Anforderungsnachricht versendet.

Mit der Anforderungsnachricht werden alle benachbarten bzw. direkt ansprechbaren Client-Einheiten CE aufgefordert, in einem Antwortschritt 102 eine Antwortnachricht (z.B. eine so genannte Beacon Response) an die Mastereinheit ME zu übermitteln. Hat z.B. die in Figur 1 beispielhaft dargestellte, direkt ansprechbare Client-Einheit CE die Anforderungsnachricht der Mastereinheit ME erhalten, antwortet sie mit der Antwortnachricht, in welcher ein Wert für eine Verbindungs- bzw. Übertragungsqualität (z.B. ein so genannter Link Cost-Wert) enthalten ist, mit welcher die Anforderungsnachricht von der jeweiligen Client-Einheit CE empfangen wurde. Üblicherweise erfolgt die Antwortnachricht der Client-Einheit CE über jene Phase L1, L2, L3, an welche die Client-Einheit CE kommunikationstechnisch angebunden ist. Durch Übersprechen kann die Antwortnachricht der Client-Einheit CE allerdings auf mehreren Phasen L1, L2, L3 von der Mastereinheit ME empfangen werden.

Die Antwortnachrichten bzw. die darin enthaltene Werte für die Verbindungsqualität (z.B. ein so genannter Link Cost-Wert) der jeweiligen Client-Einheiten CE können beispielsweise je Client-Einheit und Phasenleiter L1, L2, L3 von der Mastereinheit ME im Antwortschritt 102 gespeichert werden. Für den Fall dass die Mastereinheit ME auf eine über eine der drei Phasen L1, L2, L3 ausgesendete Anforderungsnachricht keine Antwortnachrichten von direkt ansprechbaren Client-Einheiten CE erhält, ist beispielsweise ein vorgebbare Zeitdauer (Time out) vorgesehen, nach deren Ablauf ein Warten auf Antwortnachrichten von der Mastereinheit ME abgebrochen wird und z.B. über nächste Phase L1, L2, L3 eine Anforderungsnachricht ausgesendet wird.

Nach dem Antwortschritt 102 wird beispielsweise in einem Prüfschritt 103 geprüft, ob bereits über jede der Phasen L1, L2, L3 eine Anforderungsnachricht ausgesendet worden ist. D.h., der Anforderungsschritt 101 und der Antwortschritt 102 werden solange wiederholt, bis von der Mastereinheit ME über alle drei Phasenleiter L1, L2, L3 des Niederspannungsnetze SN Anforderungsnachrichten versendet und entsprechende Antwortnachrichten von den direkt ansprechbaren Client-Einheiten CE erhalten und gespeichert wurden.

Zusätzlich kann nach einem Versand von Anforderungsnachrichten im Anforderungsschritt 101 über die einzelnen Phasenleiter L1, L2, L3 des Niederspannungsnetzes SN von der Mastereinheit EM über alle Phasenleiter L1, L2, L3 gleichzeitig und parallel eine Anforderungsnachricht an die direkt ansprechbaren Client-Einheiten CE ausgesendet werden. Die im zugehörigen Antwortschritt 102 erhaltene Antwortnachricht und/oder der Wert für die Verbindungsqualität kann wieder je Client-Einheit CE abgespeichert werden. Durch die Durchführung dieser zusätzlichen Variante des Anforderungsschritt 101 können im zugehörigen Antwortschritt 102 zusätzliche Informationen über die Verbindungsqualität zur jeweiligen Client-Einheit CE gewonnen werden, da von der Client-Einheit CE keine Information an die Mastereinheit ME übertragen wird, an welche Phase L1, L2, L3 die jeweilige Client-Einheit kommunikationstechnisch angebunden ist.

Für das in Figur 1 dargestellte Stromnetz SN bedeutet das, dass z.B. zuerst über jeden der drei Phasenleiter L1, L2, L3 einzeln von der Mastereinheit ME die Anforderungsnachricht ausgesendet wird. Die Client-Einheit CE antwortet dann bei Empfang der entsprechenden Anforderungsnachricht mit einer Antwortnachricht, welche einen jeweiligen Wert für die Verbindungsqualität umfasst. Als Wert für die Verbindungsqualität können von der Client-Einheit CE beispielsweise die so genannten "Route Cost" übermittelt werden, wobei dementsprechend ein geringere Wert eine umso bessere Verbindungsqualität darstellt. Die jeweilige Antwortnachricht bzw. der jeweils übermittelte Wert für die Verbindungsqualität wird von der Mastereinheit ME für die Client-Einheit CE und je Phase L1, L2, L3 abgespeichert. Dann kann die Mastereinheit ME die Anforderungsnachricht noch gleichzeitig über aller drei Phasenleiter L1, L2, L3 an die Client-Einheit CE senden und dann die entsprechende Antwortnachricht bzw. den entsprechenden, übermittelten Wert für die Verbindungsqualität über alle Phasenleiter L1, L2, L3 für die Client-Einheit CE ebenfalls abspeichern.

Wurde im Prüfschritt 103 festgestellt, dass alle Phasenleiter L1, L2, L3 durchgescannt wurden und z.B. zusätzlich die Anforderungsnachricht auch über alle Phasenleiter L1, L2, L3 gleichzeitig und parallel versendet wurde, so werden in einem Vergleichsschritt 104 die von der jeweiligen Client-Einheit CE übermittelten und für die jeweilige Client-Einheit gespeicherten Werte für die Verbindungsqualität verglichen und ausgewertet. In einem Auswahlschritt 105 wird dann für die jeweilige Client-Einheit CE jener Phasenleiter L1, L2, L3 ausgewählt, für welchen der übermittelte Wert für die Verbindungsqualität am geringsten ist.

Bei dem in Figur 1 beispielhaft dargestellten Stromnetz SN werden beispielsweise die für die Client-Einheit CE gespeicherten Wert für die Verbindungsqualität der Phasenleiter L1, L2, L3 auswertet. Dabei kann die Mastereinheit ME z.B. feststellen, dass der dritte Phasenleiter L3, an welchen eine Last A bzw. Störquelle A angebunden ist, entsprechend hohe bzw. schlechte Werte für die Verbindungsqualität aufweist. D.h. von der Mastereinheit ME wird die Störung durch die Last A der dritten Phase L3 erkannt und diese nicht für die Datenübertragung zur Client-Einheit CE auswählen. Weist z.B. der erste Phasenleiter L1 im Vergleich zum zweiten Phasenleiter L2 im Vergleichsschritt 104 einen besseren bzw. geringeren Wert für die Verbindungsqualität auf, so wird als Ergebnis von der Mastereinheit ME im Auswahlschritt 105 der erste Phasenleiter L1 für die Kommunikation mit der Client-Einheit CE ausgewählt.

In einem Datenübertragungsschritt 106 werden dann von der Masereinheit ME die zu übertragenden Daten, Nachrichten, Signale, etc. an die jeweiligen Client-Einheiten CE dreiphasig - d.h. über alle Phasenleiter L1, L2, L3 des Niederspannungsnetzes SN - parallel ausgesendet. Für einen Empfang von Daten, Nachrichten, etc. (z.B. Messdaten von intelligenten Zählereinheiten, Verbrauchsdaten von Ladestationen für E-Mobilität, etc.) wird von der Mastereinheit ME die für die jeweiligen Client-Einheit im Auswahlschritt 105 ausgewählte Phase L1, L2, L3 verwendet. Die ausgewählte Phase L1, L2, L3 wird dabei z.B. mittels der Schaltkomponente PS in der Mastereinheit ME eingestellt. Die Schaltkomponente PS kann z.B. ein interner, Software gesteuerter Schalter sein, durch welchen in der Mastereinheit ME nicht ausgewählte Phasen L1, L2, L3 weggeschaltet werden.

Bei Client-Einheiten CE, welche indirekt mit der Mastereinheit ME kommunizieren, kann mittels des erfindungsgemäßen Verfahrens zumindest eine Phase L1, L2, L3 für eine erste Teilstrecke der vorgegebenen Routingstrecke ausgewählt werden. D.h. es wird eine Phase L1, L2, L3 für die Datenübertragung zur ersten Client-Einheit CE in der Routingstrecke selektiert, welche von der Mastereinheit ME über das Stromnetz SN direkt ansprechbar ist.

## Patentansprüche

1. Verfahren zur Datenübertragung in einem Niederspannungsnetz (SN) mit mehreren elektrischen Phasenleitern (L1, L2, L3), welche für eine Übertragung von Daten zwischen einer Mastereinheit (ME) und Client-Einheiten (CE) genutzt werden, wobei von der Mastereinheit (ME) über alle Phasenleiter (L1, L2, L3) des Niederspannungsnetzes (SN) Nachrichten und Daten versendet und empfangen werden können, ***dadurch gekennzeichnet, dass*** folgende Schritte durchlaufen werden:
a) Aussenden einer Anforderungsnachricht über einen Phasenleiter (L1, L2, L3), mit welcher von der Mastereinheit (ME) direkt ansprechbare Client-Einheiten (CE) aufgefordert werden (101), eine Antwortnachricht mit einem Wert für eine Verbindungsqualität zu übermitteln (102);
b) Speichern zumindest des Wertes für die Verbindungsqualität für eine jeweilige Client-Einheit (CE) nach Erhalt der Antwortnachricht der jeweiligen Client-Einheit (CE, 102) ;
c) Durchführen der Schritte a) und b), bis von der Mastereinheit (ME) über jeden Phasenleiter (L1, L2, L3) des Niederspannungsnetzes (SN) die Anforderungsnachricht versendet worden ist (103);
d) Vergleichen der für die jeweilige Client-Einheit (CE) gespeicherten Werte für die Verbindungsqualität (104); und
e) Auswählen des Phasenleiters (L1, L2, L3) für die Datenübertragung mit der jeweiligen Client-Einheit (CE, 105), für welchen der gespeicherte Wert für die Verbindungsqualität der jeweiligen Client-Einheit (CE) am geringsten ist.

2. Verfahren nach Anspruch 1, **dadurch *gekennzeichnet, dass*** von der Mastereinheit (ME) zusätzlich die Anforderungsnachricht gleichzeitig über alle Phasenleiter (L1, L2, L3) gesendet wird (101), um Werte für die Verbindungsqualität für die direkte ansprechbaren Client-Einheiten (CE) abzufragen (102).

3. Verfahren nach einem der Ansprüche 1 bis 2, ***dadurch gekennzeichnet, dass*** von der Mastereinheit (ME) für einen Empfang von Daten und/oder Nachrichten der jeweiligen Client-Einheit (CE) der für die jeweilige Client-Einheit (CE) ausgewählte Phasenleiter (L1, L2, L3) eingestellt wird (106) .

4. Verfahren nach einem der vorangegangenen Ansprüche, **dadurch *gekennzeichnet, dass*** der für die jeweilige Client-Einheit (CE) ausgewählte Phasenleiter (L1, L2, L3) mittels einer Schaltkomponente (PS) in der Mastereinheit (ME) eingestellt wird (106).

5. Verfahren nach einem der vorangegangenen Ansprüche, **dadurch *gekennzeichnet, dass*** für die Datenübertragung zwischen Mastereinheit (ME) und Client-Einheiten (CE) Power Line Communication verwendet wird.

6. Verfahren nach Anspruch 5, **dadurch *gekennzeichnet, dass*** als Kommunikationsprotokoll für die Power Line Communication das G3-PLC-Protokoll verwendet wird.

7. Verfahren nach einem der vorangegangenen Ansprüche, **dadurch *gekennzeichnet, dass*** als Mastereinheit (ME) ein Datenkonzentrator oder ein so genannte Data Gateway eingesetzt werden.

8. Verfahren nach einem der vorangegangenen Ansprüche, **dadurch *gekennzeichnet, dass*** als Client-Einheiten (CE) intelligente Zählereinheiten eingesetzt werden.
